(19) Europäisches Patentamt
European Patent Office
Office européen des brevets

(11) **EP 3 977 074 B1**

(12) **EUROPÄISCHE PATENTSCHRIFT**

(45) Veröffentlichungstag und Bekanntmachung des Hinweises auf die Patenterteilung:
**17.12.2025 Patentblatt 2025/51**

(21) Anmeldenummer: **20730996.4**

(22) Anmeldetag: **27.05.2020**

(51) Internationale Patentklassifikation (IPC):
**G01J 3/44** *(2006.01)*　　**G01N 21/65** *(2006.01)*
**G01J 3/12** *(2006.01)*

(52) Gemeinsame Patentklassifikation (CPC):
**G01J 3/44; G01N 21/65;** G01J 2003/1226;
G01N 2201/129

(86) Internationale Anmeldenummer:
**PCT/EP2020/064657**

(87) Internationale Veröffentlichungsnummer:
**WO 2020/239814 (03.12.2020 Gazette 2020/49)**

(54) **VERFAHREN, VORRICHTUNG UND SYSTEM ZUM DETEKTIEREN VON RAMAN-STREULICHT**

METHOD, DEVICE AND SYSTEM FOR DETECTING RAMAN SCATTERED LIGHT

PROCÉDÉ, DISPOSITIF ET SYSTÈME DE DÉTECTION DE LA LUMIÈRE DIFFUSÉE RAMAN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.05.2019 DE 102019114252**

(43) Veröffentlichungstag der Anmeldung:
**06.04.2022 Patentblatt 2022/14**

(73) Patentinhaber: **Fraunhofer-Gesellschaft zur Förderung
der angewandten Forschung e.V.
80686 München (DE)**

(72) Erfinder:
• **FRESE, Ines**
**55120 Mainz (DE)**
• **MASKOS, Michael**
**55294 Bodenheim (DE)**

(74) Vertreter: **WSL Patentanwälte Partnerschaft mbB
Kaiser-Friedrich-Ring 98
65185 Wiesbaden (DE)**

(56) Entgegenhaltungen:
US-A- 4 176 916　　US-A- 4 648 714
US-A- 4 784 486　　US-A1- 2018 275 064

**Beschreibung**

Die Erfindung betrifft ein Verfahren, eine Vorrichtung und ein System zum Detektieren von Raman-Streulicht.

Raman-Spektroskopie ist eine der heute wichtigsten Methoden der nichtinvasiven und schnellen Verfahren zur Materialbestimmung. Man setzt üblicherweise ein Raman-Spektrometer ein, das eine sehr hohe spektrale Auflösung hat und ermöglicht anhand der charakteristischen Raman-Verschiebungen das Material zu bestimmen.

Die Raman-Spektroskopie basiert auf dem Raman-Effekt - einer nichtelastischen Lichtstreuung. Bei einer nicht-elastischer Lichtstreuung wird ein Molekül durch Anregungslicht polarisiert. Dadurch bekommt das Molekül eine zusätzliche Energie, die deutlich kleiner als die Energie der Anregung von höheren Elektronenzuständen und sehr kurzlebig ist und die sich aus einer quantenmechanischen Überlagerung aller beteiligten Zustände zusammensetzt.

Die Wellenlänge des Anregungslichtes muss für die Raman-Spektroskopie nicht unbedingt materialspezifischen Absorptionsbanden des zu untersuchenden Objekts entsprechen. Das heißt, die Wellenlänge kann in jedem beliebigen Spektralbereich ausgewählt werden. Typischerweise werden als Anregungslicht Lichtquellen mit Wellenlängen von 365 nm, 405 nm, 546 nm, 670 nm, 783 nm oder 1064 nm verwendet.

Das Raman-gestreute Licht weist eine materialspezifische spektrale Verschiebung zu der Wellenlänge des Anregungslichts auf, die den charakteristischen Energien von Rotations-, Schwingungs-, Phonon- oder Spin-Flip-Prozessen entspricht. Dies führt zu sehr geringen Wellenlängenveränderungen und bedarf dementsprechend einer hohen spektralen Auflösung bei den Detektionsgeräten.

Die Geräte sind in der Preisspanne zwischen 60.000 € und 500.000 € kommerziell erhältlich, enthalten hochqualitative und teure optische Komponenten und erfordern, abgesehen von preisgünstigeren Handheld- oder tragbaren Geräten, eine Laborumgebung mit hochqualifiziertem Bedienungspersonal. Mit modernsten Geräten und unter Verwendung eines 785 nm Anregungsstrahls kann eine spektrale Auflösung von ca. 0,1 nm erreicht werden. Die üblichen Werte für die spektrale Auflösung von Laborgeräten reicht von ca. 0,3 nm bei einer Anregungswellenlänge $\lambda_{exc}$=546 nm bis zu 1,1 nm bei $\lambda_{exc}$=1064 nm.

Preisgünstigere Handheldgeräte sind demgegenüber nachteilig, da sie die kleinere Ausführung und die günstigeren Komponenten durch Einbußen der spektralen Auflösung und der Sensitivität erkaufen.

Das spektral aufgelöste Messsignal wird meistens mittels eines CCD-Sensors detektiert. Die optische Sensitivität des CCD-Sensors ist der limitierende Faktor für die Sensitivität eines Raman-Spektrometers. Die technische Komplexität von Spektrometern, die CCD-Sensoren verwenden, wächst mit der Anzahl der Einzeldetektoren, also der Anzahl der Einzelpixel des Sensors, da jeder Einzeldetektor elektronisch nachverstärkt wird. Dementsprechend steigen nicht nur der Bedarf an geschultem Personal und die Anforderungen an die Umgebung für den Betrieb besagter Spektrometer, sondern auch die Kosten für entsprechende Geräte. Dieser Effekt wirkt insbesondere dann einschränkend, wenn es um relativ schnelle dynamische Messungen an kolloidalen oder stark verdünnten flüssigen Proben und speziell im Durchfluss geht. In diesem Fall beeinträchtigen die elastischen Streuungen an den Kolloidpartikeln und zusätzliche refraktive Effekte an den Grenzen zwischen Medien mit unterschiedlichen Brechungsindizes die Signalausbeute aus den Proben bzw. dem Probenbehälter. Für solche Proben ist eine besonders hohe Sensitivität ohne Möglichkeit einer längeren Integrationszeit erforderlich.

Ivleva et al. (N. P. Ivleva, A. C. Wiesheu, & R. Niessner (2017), Microplastic in aquatic ecosystems, Angewandte Chemie International Edition, 56(7), 1720-1739) beschreibt zwar den Versuch mittels eines μ-Raman-Spektrometers, also mit Bildanalyse und Raman-Messung von einzelnen Kolloidalpartikeln, die Anwendungsfelder herkömmlicher Messmethoden auf die Umweltproblematik mit Mikroplastik zu erweitern. Die physikalischen Beschränkungen der Bildgebung, z.B. die Beugungsgrenze oder die begrenzte mechanische Auflösung mikroskopischer Verschiebungstische, setzen dieser Methode allerdings Grenzen. μ-Raman-Spektrometer bedürfen aufgrund Ihrer Komplexität einer Laborumgebung und einer entsprechenden Erfahrung für der Bedienung. Ferner sind Geräte dieser Art mit einem hohen Kostenaufwand verbunden. Weiterer Stand der Technik ist offenbart in US4648714 A, US2018275064 A, 1, US4784486 A und US4176916 A.

Ein zusätzliches Problem der Sensitivitätserhöhung besteht dadurch, dass die Möglichkeiten einer weiteren Signalverstärkung und einer Erhöhung des Signal-Rauschverhältnisses bei den aktuellen hochwertigen gekühlten CCD-Sensoren bereits weitgehend ausgereizt sind. Zum Teil hängt dies mit der Anzahl einzelner Pixel sowie mit den physikalischen Grenzen der verwendeten Materialien zusammen.

Die einzige und bis heute realisierte Art der nicht-dispersiven Raman-Detektoren ist das FT-Raman Spektrometer. Dieses setzt zur spektralen Aufspaltung des Raman-Signals anstatt eines dispersiven Elements, wie z.B. eines Gitters, einen spektral durchstimmbaren Filter z. B. einen Fabry-Perot-Filter ein (vgl. Nondispersive Raman Spectrometers, in "Raman Spectroscopy for Chemical Analysis" 2005). Danach wird das Raman-Signal mit dem Anregungslicht überlagert und das sich bei der Überlagerung bildende Interferogramm von einem einzelnen bzw. an einem Array aus einzelnen Detektoren registriert. Für ein solches Gerät gelten jedoch die oben bereits aufgeführten Nachteile der teuren optischen Komponenten und der Notwendigkeit einer Laborumgebung. Die Idee, einen nicht-dispersiven Raman-Detektor auf Basis der konventionellen Interferenzfilter zu entwickeln, ist bereits bekannt, konnte sich aber durch eine besonders harte Anforderung an die spektrale Auflösung (Breite der Transmissionsfunktion) noch nicht durchsetzen. Bei der Verwendung eines Interferenzfilters mit einem Durchlässigkeitsbereich, der breiter als die zu detektierende Linie ist, wird die zu detektierende Intensität zusammen mit dem Hintergrund innerhalb des Durchlässigkeitsbereichs des Filters von einem Detektor gemittelt registriert, wodurch das Signal insgesamt reduziert detektiert wird.

Die Aufgabe der Erfindung besteht darin, ein verbessertes nicht-dispersives Verfahren zur Detektion von Raman-Streulicht vorzuschlagen. Die Verbesserung umfasst gegenüber dem Stand der Technik eine Ausführbarkeit durch eine handliche und transportable Vorrichtung ohne Einbußen der Auflösung und der Sensitivität, die ferner unabhängig von einer teuren und aufwändigen Laborumgebung einsetzbar ist.

Die Aufgabe wird durch das Verfahren gemäß Anspruch 1 und eine Vorrichtung gemäss Anspruch 8 gelöst.

Im Folgenden werden die Begriffe "Streulicht" und "Streulichtsignal" verwendet. Sowohl Streulicht, als auch Streulichtsignal beschreiben dieselbe Sache, nämlich Photonen, die von der zu untersuchenden Probe emittiert werden. "Streulicht" bezeichnet den physikalischen Wellen- oder Strahlcharakter - nämlich die Fähigkeit gebeugt und gebrochen zu werden oder zu interferieren. "Streulichtsignal" beschreibt hingegen den mathematischen Charakter - nämlich die Fähigkeit der Anwendbarkeit von Methoden der Signalverarbeitung und insbesondere die Fähigkeit transformiert, integriert, gefaltet oder korreliert zu werden. Die Begriffe "Licht" und "Signal" werden im Rahmen dieser Erfindung synonym verwendet.

In einem ersten Aspekt betrifft die Erfindung ein Verfahren zum Detektieren von Raman-Streulicht unter Verwendung wenigstens eines Interferenzfilters und einer Detektionseinheit, wobei das zu detektierende Raman-Streulicht ein eingehendes Streulichtsignal umfasst. Das Verfahren umfasst die in Anspruch 1 definierten Schritte.

Für das Verfahren kann ein Raman-Gerät verwendet werden, welches mittels einer Lichtquelle, insbesondere einem Laser, Teilchen in einer Probe dazu anregt, Raman-Streulicht zu emittieren. Sowohl das emittierte Raman-Streulicht als auch das Anregungslicht können von optischen Komponenten umgelenkt und/oder geleitet werden. Für die Durchführung des erfindungsgemäßen Verfahrens wird nur das Raman-Streulicht benötigt, das im Unterschied zu der elastischen Rayleigh-Streuung winkelunabhängig ist und über den gesamten Raumwinkel eine homogene Streuintensität aufweist.

Der wenigstens eine Interferenzfilter ist vorzugsweise ein schmalbandiger Interferenzfilter, wobei der wenigstens eine Interferenzfilter ein Bandpassfilter mit einer spektralen Breite zwischen 0,5 nm und 4 nm, insbesondere zwischen 1,5 nm und 2 nm und bevorzugt von 2 nm, im visuellen und/oder nahen infraroten Spektrum ist. Die spektrale Breite eines Interferenzfilters wird durch das spektrale Band $\delta\lambda$ bestimmt, welches durch eine Transmissionsfunktion definiert ist, die einer optischen Weglänge L durch den betreffenden Interferenzfilter zugeordnet ist. Der physikalische Charakter und der mathematische Charakter sowohl des Lichts als auch des wenigstens einen Interferenzfilters sind daher eng miteinander verknüpft.

Der Term "wenigstens ein Interferenzfilter" kann sowohl einen einzelnen ersten Interferenzfilter als auch mehrere Interferenzfilter meinen. Werden für das Verfahren mehrere Interferenzfilter verwendet, so werden einzelne der mehreren Interferenzfilter mit "erster Interferenzfilter", "zweiter Interferenzfilter", usw. bezeichnet.

Ein Interferenzfilter kann beispielsweise aus einer Substratschicht, bevorzugt aus Glas oder Quarzglas bestehen, das planparallel ausgebildet und ein- oder beidseitig beschichtet ist. Die Beschichtung bzw. die Beschichtungen können beispielsweise mehrere Schichten aus verschiedenen, abwechselnd aufgetragenen Materialien umfassen und sind nur für das spektrale Band $\delta\lambda$ transparent. Alle Beschichtungen bilden zusammen mit dem Substrat einen Fabry-Perot-Filter mit einer vorzugsweise quasi-rechteckigen Transmissionsfunktion.

Ein Interferenzfilter filtert daher Licht mit bestimmten Wellenlängen durch konstruktive und destruktive Interferenz. Welche Wellenlängen durch den Interferenzfilter gefiltert werden, hängt von der optischen Weglänge L des Lichts durch den wenigstens einen Interferenzfilter ab. Die optische Weglänge L ist die Summe der optischen Weglängen $L_j$ der Einzelschichten j, wobei jede optische Weglänge $L_j$ das Produkt aus dem Brechungsindex $n_j$ des Materials der jeweiligen Schichten j und der tatsächlichen Längen $l_j$ des Weges des Lichts durch die Schicht j ist. Die optische Weglänge L ist damit definiert als:

$$L = \sum_j n_j * l_j.$$

Die Längen $l_j$ hängen von der geometrischen Ausgestaltung des wenigstens einen Interferenzfilters bzw. dessen Schichten ab. Vorzugsweise weist jede Schicht j eine Dicke $d_j$ auf, wobei die Schichten j unterschiedlich dick, bzw. die Dicken $d_j$ unterschiedlich sein können. Sind die Schichten des wenigstens einen Interferenzfilters flächig ausgebildet, bestimmen sich die Längen $l_j$ anhand der Dicken $d_j$, der Brechungsindizes $n_j$, $n_{j-1}$ und der Einfallswinkel $\alpha_j$ des Raman-Streulichts auf die entsprechende Schicht j, wobei der Brechungsindex $n_{j-1}$ der Brechungsindex des der jeweiligen Schicht j vorgelagerten Mediums ist. Das der jeweiligen Schicht j vorgelagerte Medium ist im Falle der ersten Schicht üblicherweise Luft mit einem Brechungsindex von nahezu 1. Im Falle aller anderen Schichten ist der Brechungsindex $n_{j-1}$ der Brechungsindex der jeweils vorgelagerten Schicht j-1. Die Einfallswinkel $\alpha_j$ werden immer zum Lot der Eintrittsfläche des Raman-Streulichts in die entsprechende Schicht j bestimmt. Es gilt für die Länge $l_j$:

$$l_j = \frac{d_j}{\cos\left(\sin^{-1}\left(\frac{n_{j-1}}{n_j}\sin\alpha_j\right)\right)}$$

, wobei $\sin^{-1}\left(\frac{n_{j-1}}{n_j}\sin\alpha_j\right)$ nach dem Snelliusschen Brechungsgesetz den Winkel des Strahlengangs zum Lot durch die jeweilige Schicht j beschreibt.

Vereinfachend wird im Folgenden der wenigstens eine Interferenzfilter als ein optisches Bauteil mit einer (Gesamt-) Länge l und einer (Gesamt-) Dicke d beschrieben, auf das das Raman-Streulicht mit dem Einfallswinkel $\alpha$ auftrifft. Die optische Weglänge L hängt damit von der Dicke d des wenigstens einen Interferenzfilters, dem Einfallswinkel $\alpha$ des Raman-Streulichts auf den wenigstens einen Interferenzfilter und den Brechungsindizes $n_j$ der Schichtmaterialien ab.

Im Sinne der Signalverarbeitung ist jede optische Weglänge L einer Transmissionsfunktion zugeordnet. Einer ersten optischen Weglänge $L_1$ ist beispielsweise eine erste Transmissionsfunktion zugeordnet, einer zweiten optischen Weglänge $L_2$ ist eine zweite Transmissionsfunktion zugeordnet, usw. Die Zuordnungen von Transmissionsfunktionen und optischen Weglängen $L_i$ sind bijektiv, das heißt sie sind eindeutig und umkehrbar.

Eine Transmissionsfunktion definiert ein spektrales Band $\delta\lambda$ für Licht mit bestimmten Wellenlängen, das entlang der optischen Weglänge L durch einen der wenigstens einen Interferenzfilter hindurch transmittiert. Das durch eine Transmissionsfunktion definierte spektrale Band $\delta\lambda$ ist um eine mittlere Wellenlänge $\lambda_0$ angeordnet und wird nach oben durch eine Obergrenze $\delta\lambda^+$ und nach unten durch eine Untergrenze $\delta\lambda^-$ begrenzt. Es gilt:

$$\delta\lambda = \delta\lambda^+ - \delta\lambda^-.$$

Die Obergrenze $\delta\lambda^+$ und die Untergrenze $\delta\lambda^-$ können symmetrisch oder unsymmetrisch um die mittlere Wellenlänge $\lambda_0$ angeordnet sein. Als mittlere Wellenlänge $\lambda_0$ kann beispielsweise der arithmetische Mittelwert, der Modus, der Median oder ein gewichteter Mittelwert des transmittierten Wellenspektrums herangezogen werden. Entscheidend ist, dass der Mittelwert für alle Transmissionsfunktionen in der gleichen Weise bestimmt wird. Im Zusammenhang mit rechteckigen Transmissionsfunktionen wird die mittlere Wellenlänge $\lambda_0$ in der Praxis auch als "Zentralwellenlänge" der Transmissionsfunktion bezeichnet.

Näherungsweise kann eine Transmissionsfunktion durch eine Rechteckfunktion beschrieben werden, wobei die Transmissionsfunktion $f(\lambda)$ dann definiert wird als:

$$f(\lambda) = \begin{cases} 0, wenn\ \lambda > \lambda_0 + \delta\lambda^+ \\ 0, wenn\ \lambda < \lambda_0 - \delta\lambda^- \\ 1, wenn\ \lambda_0 - \delta\lambda^- \leq \lambda \leq \lambda_0 + \delta\lambda^+ \end{cases}.$$

Insbesondere gilt $|\lambda_0 + \delta\lambda^+| = |\lambda_0 - \delta\lambda^-|$, wenn die Obergrenze und die Untergrenze symmetrisch um die mittlere Wellenlänge $\lambda_0$ angeordnet sind, es sich also tatsächlich um die Zentralwellenlänge handelt.

Es sei an dieser Stelle angemerkt, dass der Begriff "Transmissionsfunktion", wie er in dieser Schrift verwendet wird, nicht der häufig auch als "Transmissionsfunktion" bezeichneten technischen Angabe zu einem Interferenzfilter gleichzusetzen ist. Während die technische Angabe stets die Transmissionseigenschaft eines Interferenzfilters unter senkrechtem Lichteinfall und somit eine konstante Materialeigenschaft meint, ist unter dem hierin verwendeten Begriff eine von einer variablen optischen Weglänge abhängige Transmissionsfunktion gemeint. Diese beschreibt im Ergebnis zwar auch eine Quasi-Rechteckfunktion, kann aber beispielsweise aufgrund verschiedener Einstrahlwinkel durch denselben Interferenzfilter oder durch verschiedene Schichtdicken des Interferenzfilters zu anderen Frequenzen verschoben sein. Und genau eine solche Verschiebung macht sich die Erfindung zunutze.

Die gesteigerte spektrale Auflösung wird nämlich dadurch erreicht, dass mit einer Reihe von minimal gegeneinander spektral verschobenen Transmissionsfunktionen das eingehende Streulichtsignal, mit anderen Worten das eingehende Raman-Streulicht, auf der Detektionseinheit abgebildet wird.

Unter einer "spektral verschobenen Transmissionsfunktion" wird eine Transmissionsfunktion verstanden, die einer von einer ersten optischen Weglänge $L_1$ verschiedenen zweiten optischen Weglänge $L_2 \neq L_1$ zugeordnet ist und ein zweites spektrales Band $\delta\lambda_2$ definiert, dessen mittlere Wellenlänge $\lambda_{2,0}$ gegenüber der mittleren Wellenlänge $\lambda_{1,0}$ des ersten spektralen Bands mit der spektralen Breite $\delta\lambda_1$, verschoben ist. Die spektrale Verschiebung um die Wellenlänge

$\Delta\lambda_2$ wird immer gegenüber der ersten mittleren Wellenlänge $\lambda_{1,0}$ angegeben, wobei die erste mittlere Wellenlänge $\lambda_{1,0}$ als Referenzwellenlänge fungiert. Es gilt:

$$\Delta\lambda_2 = |\lambda_{2,0} - \lambda_{1,0}|.$$

Die Verschiebung selbst wird ebenfalls mit der Einheit "Wellenlänge" angegeben.

Eine "minimale" spektrale Verschiebung einer Transmissionsfunktion um die Wellenlänge $\Delta\lambda_2$ bedeutet, dass die spektrale Verschiebung der Transmissionsfunktion um die Wellenlänge $\Delta\lambda_2$ kleiner und vorzugsweise sehr viel kleiner als die spektrale Breite $\delta_2$ der Transmissionsfunktion selbst ist. Die Verschiebung beträgt vorzugsweise minimal 0,1 nm. Ferner beträgt die Verschiebung vorzugsweise maximal 2 nm, besonders bevorzugt ist die Verschiebung kleiner als 1 nm. Das Verhältnis aus der spektralen Breite $\delta\lambda_1$ und $\delta_2$ jeder der Transmissionsfunktionen zu der spektralen Verschiebung $\Delta\lambda_2$ beträgt aus Auflösungsgründen vorzugsweise mindestens 2 und besonders bevorzugt mindestens 3. Ferner beträgt das Verhältnis aus der spektralen Breite $\delta\lambda_1$ und $\delta_2$ jeder der Transmissionsfunktionen zu der spektralen Verschiebung $\Delta\lambda_2$ aus Praktikabilitätsgründen bevorzugt höchstens 10, besonders bevorzugt höchstens 6 und ganz besonders bevorzugt nicht mehr als 4.

Während für die Erzeugung des ersten gefilterten Streulichtsignals ein erster Interferenzfilter mit einer ersten Dicke $d_1$ und/oder bestehend aus Schichten mit ersten Brechungsindizes $n_{1,j}$ verwendet wird, kann für die Erzeugung des zweiten gefilterten Streulichtsignals ein vom ersten Interferenzfilter zu unterscheidender zweiter Interferenzfilter mit einer zweiten Dicke $d_2$ und/oder bestehend aus Schichten mit zweiten Brechungsindizes $n_{2,j}$ verwendet werden. Alternativ kann für das Erzeugen des zweiten gefilterten Streulichtsignals ein Weg für das Raman-Streulicht durch den ersten Interferenzfilter mit der zweiten optischen Weglänge $L_2 \neq L_1$ gewählt werden. Dazu kann beispielsweise der Einfallswinkel $\alpha_2$ des Raman-Streulichts auf den ersten Interferenzfilter bei der Erzeugung des zweiten gefilterten Streulichtsignals gegenüber dem Einfallswinkel $\alpha_1$ bei der Erzeugung des ersten gefilterten Streulichtsignals geändert werden. Mit anderen Worten, das Raman-Streulicht trifft zur Erzeugung des zweiten gefilterten Streulichtsignals unter einem anderen Einfallswinkel $\alpha_2 \neq \alpha_1$ auf die Oberfläche des ersten Interferenzfilters als bei der Erzeugung des ersten gefilterten Streulichtsignals.

Die beiden bei der Erzeugung der Streulichtsignale verwendeten und minimal gegeneinander verschobenen, durch die Transmissionsfunktionen definierten spektralen Bänder $\delta\lambda_1$ und $\delta_2$ überlagern sich teilweise. Die Analyse der Gesamtheit der gefilterten Streusignale liefert anschließend Informationen über die Raman-Linien in der Probe, die normalerweise nur unter Verwendung von hochauflösenden Raman-Geräten erhalten werden können. Werden die detektierten Streulichtsignale miteinander verrechnet, können diese Informationen aus dem detektierten Streulicht extrahiert und zu einem Raman-Spektrum zusammengesetzt werden. Während ein einzelnes gefiltertes Streulichtsignal das gemessene Spektrum über das entsprechende Band $\delta\lambda_1$ integriert, liefern die zwei oder mehreren Signale weniger als die Bandbreite $\delta\lambda_1$ der Transmissionsfunktionen voneinander beabstandete Stützstellen, aus denen sich das Spektrum mit höherer Auflösung rekonstruieren lässt. Insbesondere können so die Positionen von Raman-Peaks genau bestimmt werden, selbst dann, wenn diese schmaler sind als die spektralen Bänder der Transmissionsfunktionen.

So ist es möglich, dass unter Verwendung von im Verhältnis zu einer teuren Laborausrüstung günstigen Komponenten, nämlich dem wenigstens einen Interferenzfilter und der Detektionseinheit, ein hochauflösendes Raman-Spektrum detektiert werden kann. Da für das Verfahren nur ein oder wenige Interferenzfilter und eine Detektionseinheit mit einer einzelnen oder wenigen Detektorzellen notwendig sind, kann ein entsprechendes Detektionsgerät in handlicher Größe, insbesondere transportabel, gebaut werden.

Das Verfahren ist nicht auf das Erzeugen eines ersten und eines zweiten gefilterten Streulichtsignals beschränkt. Es kann ferner das Erzeugen von beliebig vielen weiteren gefilterten Streulichtsignalen umfassen, die analog zu dem zweiten gefilterten Streulichtsignal erzeugt werden. Das Verfahren umfasst dann ferner folgenden Schritt:

- Erzeugen weiterer gefilterter Streulichtsignale durch Anwenden weiterer Transmissionsfunktionen auf das eingehende Streulichtsignal, wobei jede der weiteren Transmissionsfunktionen jeweils einer weiteren optischen Weglänge $L_i \neq L_1$ durch den ersten Interferenzfilter oder durch einen weiteren Interferenzfilter zugeordnet ist, wobei die weiteren Transmissionsfunktionen jeweils ein weiteres spektrales Band $\delta\lambda_i$ definieren, wobei die weiteren spektralen Bänder $\delta\lambda_i$ Licht mit weiteren Wellenlängen um weitere mittlere Wellenlängen $\lambda_i$ umfassen, wobei die weiteren mittleren Wellenlängen $\lambda_i$ gegenüber der ersten mittleren Wellenlänge $\lambda_1$ jeweils um eine Wellenlänge $\Delta\lambda_i$ verschoben sind, wobei das Licht der weiteren Wellenlängen durch den ersten Interferenzfilter oder den einen der weiteren Interferenzfilter transmittiert.

Beim Fertigen von Interferenzfiltern auf Wafern mit einem Durchmesser von $\geq 4"$ ändern sich die Dicken der Einzelschichten der Beschichtung vom Zentrum bis zum Rand des Wafers aufgrund von technischen Limitierungen bei der Produktion. Dadurch kann es vorkommen, dass Einzelschichten am Rand dünner sind als in der Mitte des Wafers, was zu einer Verschiebung der mittleren Wellenlänge $\lambda_0$ führt. Dieser eigentlich als Produktionsfehler geltende Effekt kann erfindungsgemäß genutzt werden, indem der Wafer in Teilstücke zerlegt wird, wobei jedes Teilstück eine eigene mittlere Wellenlänge $\lambda_0$ aufweist. Interferenzfilter, die aus solchen Teilstücken gebildet sind, lassen bei gleicher Lage im Raum aufgrund der unterschiedlichen mittleren Wellenlängen $\lambda_0$ und der gleichen spektralen Breite leicht gegeneinander verschobene Spektralbereiche des Raman-Streulichts transmittieren. Dieser Effekt kann zu einer Verschiebung der Transmissionsfunktion eines Interferenzfilters um bis zu 10 nm führen.

Ein großflächiger Wafer kann mit einem vergleichsweise kleinen Aufwand in Bezug auf die spektrale Verschiebung kartographiert und auf eine notwendige Größe vereinzelt werden. Auf diese Weise kann ein Filterbaukasten für einen ca. 12 nm breiten Spektralbereich (2 nm spektrale Breite + 10nm Verschiebung) erzeugt werden. Ein so zusammengestellter Filterbaukasten umfasst den ersten, den zweiten und weitere Interferenzfilter, wobei die Transmissionsfunktionen des zweiten bzw. der weiteren Interferenzfilter gegenüber der ersten mittleren Wellenlänge $\lambda_1$ um die Wellenlängen $\Delta\lambda_2$ bzw. $\Delta\lambda_i$ verschoben sind.

In vorteilhafter Weise kann also ein Produktionsfehler für das beanspruchte Verfahren genutzt werden, indem Interferenzfilter mit unterschiedlichen optischen Weglängen $L_i$ in einem einzigen Fertigungsvorgang hergestellt werden. Die für das Verfahren benötigten Komponenten werden dadurch günstiger.

In vorteilhafter Weise kann ferner durch das Verwenden von weiteren Interferenzfiltern der Aufbau eines Geräts zum Ausführen des Verfahrens vereinfacht werden. Es werden keine beweglichen Teile für beispielsweise eine Schwenkbewegung zur Änderung des Einfallswinkels $\alpha$ benötigt. Ferner kann die Detektionseinheit als eine einzelne Detektorzelle ausgebildet sein, was die Kosten weiter reduziert.

In einer Ausführungsform umfasst das Verfahren ferner folgende Schritte:

- Erzeugen eines Referenzlichtsignals,
- Erzeugen eines ersten gefilterten Referenzlichtsignals durch Anwenden der ersten Transmissionsfunktion auf das Referenzlichtsignal, wobei das gefilterte Referenzlichtsignal dem ersten gefilterten Streulichtsignal zugeordnet ist,
- Erzeugen eines zweiten gefilterten Referenzlichtsignals durch Anwenden der zweiten Transmissionsfunktion auf das Referenzlichtsignal, wobei das zweite gefilterte Referenzlichtsignal dem zweiten gefilterten Streulichtsignal zugeordnet ist,
- Detektieren des ersten und zweiten gefilterten Referenzlichtsignals durch die Detektionseinheit,
- Erzeugen korrigierter gefilterter Streulichtsignale durch Subtrahieren der gefilterten Referenzlichtsignale von den jeweils zugeordneten gefilterten Streulichtsignalen.

Das Subtrahieren der gefilterten Referenzlichtsignale von den jeweiligen gefilterten Streulichtsignalen bewirkt in vorteilhafter Weise, dass Fehler der von der Detektionseinheit erfassten Signale reduziert werden können. Insbesondere können durch die Korrektur systemimmanente Fehler, insbesondere Fehler durch optische Unreinheit der verwendeten Komponenten oder Justagefehler, reduziert werden. Das Referenzlichtsignal wird durch das gleiche Anregungslicht erzeugt wie das Messignal, das die Vorrichtung auf dem gleich Pfad und soweit vorhanden auch mit dem gleichen Träger (Luft, Wasser, Mikroskopträger, Behälter etc.) aber ohne die gesuchte Substanz durchläuft.

In einer weiteren Ausführungsform wird aus den detektieren Streulichtsignalen oder aus den korrigierten Streulichtsignalen ein Raman-Spektrum erzeugt.

Das Raman-Spektrum kann einen oder mehrere Peaks umfassen, wobei jedem Peak eine Peakhöhe und eine Peakposition in dem Raman-Spektrum zugeordnet sind. Jeder Peakposition in dem Raman-Spektrum ist wenigstens ein Material zugeordnet. Die Peakhöhe umfasst Informationen über die Menge des der Peakposition zugeordneten Materials in der Probe. Umfasst das Raman-Spektrum keine Peaks, so können in der Probe keine Materialien nachgewiesen werden, deren Raman-Linien in dem untersuchten Spektrum liegen.

Die Intensität des Raman-gestreuten Lichtes ist proportional zu der Anzahl der streuenden Moleküle in der Probe. Es gilt:

$$I \sim v^4 I_0 N \left(\frac{\partial a}{\partial q}\right)^2,$$

wobei I die Intensität des Raman-Streulichts, v die Frequenz des anregenden Lasers, $I_0$ die Intensität des anregenden Lasers, N die Anzahl der streuenden Moleküle und $\frac{\partial a}{\partial q}$ die Polarisierbarkeitsänderung sind.

In einer weiteren Ausführungsform wird für das Erzeugen des Raman-Spektrums eine multivariante Datenanalyse, insbesondere Chemometrie, verwendet.

Multivariante Datenanalysen sind Verfahren, in denen mehrere Variablen zugleich untersucht werden. Die Variablen können dabei unterschiedliche gewichtet sein, wobei die Gewichtung der einzelnen Variablen nicht unbedingt bekannt ist. Zu den multivarianten Datenanalysen gehören Verfahren wie beispielsweise strukturentdeckende Verfahren, insbesondere die Faktorenanalyse, die Clusteranalyse oder die multidimensionale Skalierung oder strukturprüfende Verfahren, insbesondere die Varianzanalyse, künstliche Neuronale Netze, die Diskriminanzanalyse und die Conjoint-Analyse.

Als Chemometrie oder chemometrische Methoden werden die auf einer multivarianten Datenanalyse basierenden Methoden bezeichnet, mit denen ein Maximum an chemischen Informationen aus experimentellen Messdaten extrahiert werden kann. Spektren von Materialmischungen in der Nahinfrarot-, visuellen, oder uv-Spektroskopie sind in der Regel nur unter Verwendung von chemometrischen Methoden auswertbar. Zu solchen Methoden gehören beispielsweise die Hauptkomponentenanalyse, die Clusteranalyse und die multiple lineare Regression.

In vorteilhafter Weise kann die spektrale Auflösung durch das Verwenden von chemometrischen Methoden erhöht werden. Die spektrale Breite der Peaks in dem Raman-Spektrum kann damit deutlich geringer sein als die Breite der spektralen Bänder $\delta\lambda$ der angewandten Transmissionsfunktionen.

Mit höher aufgelösten Peaks lässt sich die Genauigkeit der Bestimmung von Materialien oder Materialienmischungen und deren Menge in der Probe erhöhen, sodass eine derartige Bestimmung auch an im Durchfluss befindlichen Proben durchgeführt werden kann. Auf gleiche Weise können chemometrische Methoden zur Auflösung eines aus minimal gegeneinander verschobenen und überlagerten (Teil-) Spektren gebildeten Gesamtspektrums beitragen. Die Verschiebung zwischen den Spektren verhilft in diesem Fall zu einer höheren Auflösung des zu bestimmenden Gesamtspektrums. Insbesondere in der Umwelttechnik lassen sich die Ergebnisse auf umweltrelevante Materialmischungen anwenden, wodurch sich beispielsweise die Belastung eines Gewässers mit Mikropartikeln, insbesondere Mikroplastik, bestimmen und Beiträge von organischen und anorganischen Partikeln unterscheiden lassen.

In einer Ausführungsform weist das eingehende Streulichtsignal eine Propagationsrichtung auf, wobei das Verfahren zwischen dem Erzeugen des ersten gefilterten Streulichtsignals und dem Erzeugen des zweiten gefilterten Streulichtsignals ein Schwenken des ersten Interferenzfilters relativ zur Propagationsrichtung des eingehenden Streulichtsignals umfasst, wobei das Schwenken des ersten Interferenzfilters eine Änderung der ersten optischen Weglänge $L_1$ zu der zweiten optischen Weglänge $L_2$ bewirkt.

Wie oben bereits erläutert, hängt die Verschiebung der zweiten Transmissionsfunktion gegenüber der ersten Transmissionsfunktion um die Wellenlänge $\Delta\lambda_2$ von dem Unterschied der zweiten optischen Weglänge $L_2$ zu der ersten optischen Weglänge $L_1$ ab. Wird der erste Interferenzfilter relativ zu der Propagationsrichtung des eingehenden Streulichtsignals verschwenkt, ändert sich der Einfallswinkel $\alpha$ des Raman-Streulichts von einem ersten Einfallswinkel $\alpha_1$ zu einem zweiten Einfallswinkel $\alpha_2$. Dadurch ändert sich auch die optische Weglänge $L$ von der ersten optischen Weglänge $L_1$ zu der zweiten optischen Weglänge $L_2$. Der Einfallswinkel $\alpha$ kann also verändert werden, indem der erste Interferenzfilter relativ zu der Propagationsrichtung des eingehenden Streulichtsignals um einen Winkel $\varepsilon$ verschwenkt wird. Die Wellenlänge $\Delta\lambda_2$ der spektralen Verschiebung lässt sich wie folgt abschätzen:

$$\Delta\lambda_2 = |\lambda_2 - \lambda_1|$$

$$\text{mit } \lambda_2 \approx \lambda_1\sqrt{1 - \frac{\sin^2\varepsilon}{n_1^2}},$$

Der Winkel $\varepsilon$ kann für das Erzeugen des zweiten bzw. der weiteren gefilterten Streulichtsignale stufenlos oder in Intervallschritten eingestellt werden. Als Intervallschritte können, ohne darauf beschränkt zu sein, Schritte von 0,1°, 0,5°, 1° oder >1° gewählt werden.

Der Winkel $\varepsilon$ kann für das Erzeugen des zweiten gefilterten Streulichtsignals oder der weiteren gefilterten Streulichtsignale beispielsweise in einem Bereich von 0,1° bis 20° und bevorzugt von 0,1° bis 15° eingestellt werden. Es sei angemerkt, dass der Winkel $\varepsilon$ eine Änderung der Lage des ersten Interferenzfilters von einer ersten Lage zu einer zweiten Lage beschreibt. Die Winkel $\varepsilon$ für das Erzeugen des zweiten gefilterten Streulichtsignals und gegebenenfalls der weiteren gefilterten Streulichtsignale beziehen sich immer auf eine erste Position des ersten Interferenzfilters, welche auch als Referenzposition bezeichnet werden kann.

In vorteilhafter Weise benötigt diese Ausführungsform nur den ersten Interferenzfilter, mit dem sich das zweite gefilterte Streulichtsignal und gegebenenfalls die weiteren gefilterten Streulichtsignale erzeugen lassen. Die gefilterten Streulichtsignale werden mit unterschiedlichen Winkeln $\varepsilon$ nacheinander erzeugt, wobei der erste Interferenzfilter für jedes gefilterte Streulichtsignal auf eine entsprechende Stellung geschwenkt wird. Ferner benötigt diese Ausführungsform nur eine einzige Detektorzelle als Detektionseinheit, auf die das gesamte gefilterte Raman-Streulicht abgebildet, in der Regel fokussiert, wird. Damit lassen sich die Anzahl der für das Verfahren benötigten Komponenten und folglich die Kosten reduzieren.

Eine alternative Ausgestaltung des Verfahrens sieht vor, dass zwischen dem Erzeugen des ersten gefilterten Streulichtsignals und dem Erzeugen des zweiten gefilterten Streulichtsignals ein Austauschen des ersten Interferenzfilters durch den zweiten Interferenzfilter erfolgt.

Dabei wird die zweite optische Weglänge $L_2 \neq L_1$ durch den zweiten Interferenzfilter durch eine gegenüber dem ersten Interferenzfilter unterschiedliche Dicke $d_2 \neq d_1$ oder durch gegenüber dem ersten Interferenzfilter unterschiedliche Brechungsindizes $n_{2,j} \neq n_{1,j}$ oder durch eine unterschiedliche Dicke und unterschiedliche Brechungsindizes bewirkt. Auch in diesem Fall benötigt die Vorrichtung nur eine einzige Detektorzelle als Detektionseinheit, auf die das gesamte gefilterte Streulichtsignal bzw. das zu detektierende Raman-Streulicht abgebildet/fokussiert wird, und damit eine geringe Anzahl benötigter Komponenten.

Anstelle eines Austauschens können alternativ zwei oder mehr Interferenzfilter zum Erzeugen des ersten und des zweiten und gegebenenfalls weiterer gefilterter Streulichtsignale an unterschiedlichen Orten positioniert sein, sodass die unterschiedlich gefilterten Streulichtsignale gleichzeitig detektiert werden können. Hierzu bedarf es mehrerer jeweils den einzelnen Interferenzfiltern zugeordnete Detektionseinheiten.

Eine weitere Ausführungsform kombiniert die Merkmale beider vorstehender Ausführungsbeispiele. Hierbei werden mehrere schwenkbare Interferenzfilter mit jeweils unterschiedlichen Dicken d und/oder Beschichtungen mit unterschiedlichen Brechungsindizes $n_j$ verwendet. In vorteilhafter Weise kann dadurch die potenzielle Reichweite der spektralen Verschiebungen erhöht werden. Durch das Verwenden von mehreren schwenkbaren Interferenzfiltern kann die Anzahl der Möglichkeiten, unterschiedlich spektral verschobene Transmissionsfunktionen anzuwenden bzw. der Umfang des erfassbaren Raman-Spektrums erhöht werden.

Folgendes Beispiel soll dies verdeutlichen: Ein erster Interferenzfilter mit der Dicke $d_1$ und den Brechungsindizes $n_{1,j}$ lässt sich durch Schwenken so positionieren, dass Transmissionsfunktionen mit spektralen Bändern $\delta\lambda_{AB}$, die in der Summe von der Wellenlänge $\lambda_A$ bis zu der Wellenlänge $\lambda_B$ reichen, verwendet werden können. Ein zweiter Interferenzfilter, beispielsweise mit einer anderen Dicke $d_2 \neq d_1$ und/oder anderen Brechungsindizes $n_{2,j} \neq n_{1,j}$ kann durch Schwenken so positioniert werden, dass Transmissionsfunktionen mit spektralen Bändern $\delta\lambda_{CD}$, die in der Summe von der Wellenlänge $\lambda_C$ bis zu der Wellenlänge $\lambda_D$ reichen, verwendet werden können. Der gesamte spektrale Bereich, der mit diesen zwei Interferenzfiltern erfassbar ist, umfasst damit die Wellenlängen zwischen $\lambda_A$ und $\lambda_B$ sowie zwischen $\lambda_C$ und $\lambda_D$.

Eine weitere alternative Ausgestaltung des Verfahrens sieht vor, dass das eingehende Streulichtsignal divergent oder konvergent propagiert und das Erzeugen des ersten gefilterten Streulichtsignals unter einem ersten Winkel $\alpha_1$ relativ zu einem Referenzstrahl und das Erzeugen des zweiten gefilterten Streulichtsignals unter einem zweiten Winkel $\alpha_2 \neq \alpha_1$ relativ zu dem Referenzstrahl erfolgen. Das Licht der ersten Wellenlängen und das Licht der zweiten Wellenlängen transmittiert durch den ersten Interferenzfilter.

Als Referenzstrahl kommt vorzugsweise das Lot auf die Eintrittsfläche des ersten Interferenzfilters beim Erzeugen des ersten gefilterten Streulichtsignals in Betracht.

Beispielsweise lässt sich der Einfallswinkel $\alpha$, mit dem das Raman-Streulicht auf die Oberfläche des ersten Interferenzfilters trifft, durch eine erste Sammellinse ändern, die vor dem ersten Interferenzfilter positioniert ist. Aus einem näherungsweise parallelen, beispielsweise kollimierten, Raman-Streulicht erzeugt die erste Sammellinse einen Strahlfokus vor, in oder hinter dem Interferenzfilter, jedoch nicht auf dem Detektor. Das Raman-Streulicht kann dann als eine Summe aus infinitesimal breiten Teilstrahlen betrachtet werden. Jeder der Teilstrahlen trifft unter einem individuellen Einfallswinkel $\alpha_i$ auf den ersten Interferenzfilter. Durch die unterschiedlichen Einfallswinkel $\alpha_i$ ergeben sich für jeden Teilstrahl auch unterschiedliche optische Weglängen $L_i$ durch den ersten Interferenzfilter. Dementsprechend werden aus dem eingehenden Streulichtsignal unter Verwendung der ersten Sammellinse mehrere gefilterte Streulichtsignale erzeugt. Das Verfahren umfasst dann vor dem Erzeugen des ersten gefilterten Streulichtsignals ferner folgenden Schritt:

- Fokussieren des eingehenden Streulichtsignals unter Verwendung einer ersten Sammellinse.

Der Winkelbereich, der mit dieser Ausführungsform abgedeckt werden kann, hängt von den optischen Eigenschaften, insbesondere dem Brechungsindex, der ersten Sammellinse ab.

Für dieses Verfahren umfasst die Detektionseinheit ein Array aus mehreren Detektorzellen, wobei die gefilterten Streulichtsignale von den Detektorzellen detektiert werden.

Alternativ zu einer Sammellinse kommt auch eine Zerstreuungslinse in Betracht, mit welcher der eingehende Streulichtstrahl aufgefächert wird.

In einem weiteren Aspekt betrifft die Erfindung eine Vorrichtung zum Detektieren von Raman-Streulicht gemäß Anspruch 8, wobei die Vorrichtung dazu ausgebildet ist, das oben beschriebene Verfahren auszuführen, wobei die Vorrichtung umfasst:

- einen ersten Interferenzfilter,
- eine erste Linse und
- eine Detektionseinheit.

Für die beanspruchte Vorrichtung kommen Interferenzfilter infrage, deren Substrat vorzugsweise aus Glas, insbesondere Quarzglas, für Wellenlängen im ultravioletten, sichtbaren oder infraroten Spektrum oder speziell für das infrarote Spektrum aus Saphirglas oder Germanium gefertigt sind. Die Interferenzfilter sind vorzugsweise zwischen 0,5 und 2 mm dick. Der erste und gegebenenfalls der zweite Interferenzfilter weisen eine spektrale Breite von wenigen Nanometern, insbesondere zwischen 0,5 nm und 4 nm und vorzugsweise zwischen 1,5 nm und 2 nm und besonders bevorzugt eine spektrale Breite von 2 nm auf.

Die Detektionseinheit kann beispielsweise, ohne darauf beschränkt zu sein, als Photomultiplier-Tube (PMT), insbesondere Silizium-Photomultiplier, Charge Coupled Device (CCD), Avalanche Photodiode (APD), insbesondere Silizium-APD oder Single Photon Avalanche Diode (SPAD) oder Nahinfrarotdiode, insbesondere aus Indium-Gallium-Arsenid, ausgebildet sein.

Erfindungsgemäß umfasst die Vorrichtung eine erste Linse, wobei die Detektionseinheit ein Array aus Detektorzellen, auch Pixel genannt, umfasst, wobei das Array relativ zu der ersten Linse so ausgerichtet ist, dass Licht durch die erste Linse konvergent oder divergent auf das Array abgebildet wird, wobei der erste Interferenzfilter zwischen der ersten Linse und der Detektionseinheit positioniert ist.

Die erste Linse kann sowohl als Sammellinse als auch als Zerstreuungslinse ausgebildet sein.

Das Array kann insbesondere als eindimensionales Array aus Detektorzellen ausgebildet sein. Ferner wird das Array vorzugsweise so positioniert, dass das Raman-Streulicht bzw. die Teilstrahlen das Array möglichst vollständig ausleuchten.

Die erste Linse fokussiert oder defokussiert das Raman-Streulicht der Gestalt, dass das Raman-Streulicht, wie oben bereits beschrieben, in Teilstrahlen auf den ersten Interferenzfilter trifft, wobei jeder Teilstrahl unter einem anderen Einfallswinkel $\alpha_i$ auf die Oberfläche des ersten Interferenzfilters trifft. Dadurch wird auf jeden Teilstrahl eine andere Transmissionsfunktion angewandt. Die Transmissionsfunktionen sind jeweils um die Wellenlänge $\Delta\lambda_i$ entsprechend dem Winkel $\alpha_i$ gegenüber der ersten Transmissionsfunktion verschoben.

In einer weiteren Ausführungsform ist die erste Linse als Zylinderlinse mit einer ersten Zylinderachse ausgebildet ist, wobei die die Vorrichtung ferner eine zweite Linse umfasst, wobei die zweite Linse als Zylindersammellinse mit einer zweiten Zylinderachse ausgebildet ist, wobei die erste und die zweite Zylinderachse senkrecht zueinander orientiert sind und wobei das Array entlang der Brennlinie der zweiten Linse positioniert ist.

In vorteilhafter Weise fokussiert die zweite Zylindersammellinse das gefilterte Streulichtsignal auf die Detektionseinheit, wodurch die Signalstärke erhöht wird.

Die erste Linse kann bevorzugt ebenfalls als Zylindersammellinse ausgebildet und so positioniert sein, dass die Brennlinie der ersten Linse vor, auf, in oder hinter der Oberfläche des ersten Interferenzfilters liegt.

In vorteilhafter Wiese lässt sich durch diese Konfiguration der ersten und zweiten Zylindersammellinsen die Lichtausbeute des Streulichts durch die Detektionseinheit erhöhen.

Die zweite Linse ist bevorzugt zwischen dem ersten Interferenzfilter und dem Array aus Detektorzellen positioniert ist.

In einer Ausführungsform ist der erste Interferenzfilter schwenkbar gelagert.

Das Schwenken des ersten Interferenzfilters kann entweder mit Hilfe eines, insbesondere miniaturisierten, Halterungsrahmens oder einer anderen geeigneten Einrichtung festgelegt werden oder durch eine periodische Drehung um die Schwenkachse erfolgen. Durch eine periodische Drehung wird ein "durchstimmbarer" Interferenzfilter realisiert.

Diese Ausführungsform realisiert die Variante des oben beschriebenen Verfahrens, bei der die optische Weglänge L durch eine Änderung des Einfallswinkels $\alpha$ des Raman-Streulichts erreicht wird. In dieser Ausführungsform wird in vorteilhafter Weise nur eine Detektorzelle als Detektionseinheit benötigt, wodurch die Kosten für die Vorrichtung weiter gesenkt werden können. Ferner kann die einzelne Detektorzelle mit einer größeren Detektionsfläche versehen sein, wodurch sich die Signalstärke erhöht.

In einer weiteren Ausführungsform kann die Vorrichtung eine erste Sammellinse, eine zweite Sammellinse und einen schwenkbaren ersten Interferenzfilter gemäß den oben genannten Ausführungsformen in Kombination aufweisen.

In einer Ausführungsform ist der erste Interferenzfilter durch den zweiten Interferenzfilter und/oder weitere Interferenzfilter austauschbar ausgebildet.

In dieser Ausführungsform wird die spektrale Verschiebung um die Wellenlänge $\Delta\lambda_2$ bzw. $\Delta\lambda_i$ durch den zweiten bzw. die weiteren Interferenzfilter realisiert.

Die Vorrichtung kann beispielsweise eine Halterung für die Interferenzfilter umfassen, mit der die Interferenzfilter nacheinander in eine Position gebracht werden, die das Erzeugen der gefilterten Streulichtsignale ermöglicht. Die Halterung kann beispielsweise als Magazin ausgebildet sein, in welchem die Interferenzfilter hintereinander positioniert sind.

In einer alternativen Ausführungsform sind mehrere Interferenzfilter mit jeweils einer Detektorzelle angeordnet, sodass das Erzeugen des ersten und des zweiten Streulichtsignals, sowie gegebenenfalls der weiteren gefilterten Streulichtsignale, gleichzeitig erfolgen können.

Ferner kann die Vorrichtung ein geschlossenes Gehäuse mit einem für das Raman-Streulicht transparenten Einlass umfassen, um die optischen Komponenten der Vorrichtung vor Staub oder einer Beschädigung zu schützen.

In einem weiteren Aspekt betrifft die Erfindung ein System zum Detektieren von Raman-Streulicht, umfassend eine Lichtquelle, insbesondere eine Laserquelle, eine Vorrichtung zum Positionieren einer Probe und eine optische Vorrichtung, wobei die optische Vorrichtung dazu ausgebildet ist, das Licht der Lichtquelle auf die Probe zu richten, wobei das System ferner eine der oben beschriebenen Vorrichtungen umfasst.

Im Folgenden werden Ausführungsformen der Erfindung anhand von Figuren beschrieben. Es zeigen:

Figur 1      eine schematische Darstellung einer Ausführungsform mit einer ersten Sammellinse;

Figur 2      eine schematische Darstellung der Ausführungsform aus Figur 1 aus einer anderen Perspektive;

Figur 3      eine schematische Darstellung einer weiteren Ausführungsform mit einem schwenkbaren ersten Interferenzfilter;

Figur 4      eine schematische Darstellung einer Ausführungsform mit mehreren Detektoren.

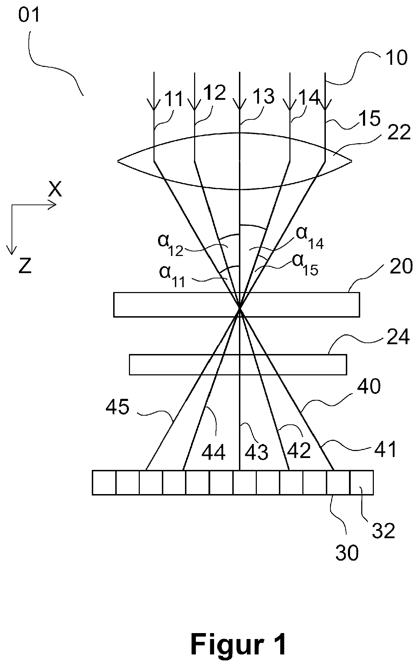

Figur 1 zeigt eine Ausführungsform der Vorrichtung 01. Die Vorrichtung 01 umfasst einen ersten Interferenzfilter 20, eine Detektionseinheit 30, und eine erste Sammellinse 22. Die Detektionseinheit 30 umfasst mehrere nebeneinander in einer Reihe angeordnete Detektorzellen 32. Raman-Streulicht, umfassend ein eingehendes Streulichtsignal 10, trifft auf die erste Sammellinse 22. Das eingehende Streulichtsignal 10 setzt sich zusammen aus den eingehenden Teilstrahlen 11 bis 15. Die Sammellinse 22 bricht das eingehende Streulichtsignal 10 und fokussiert das eingehende Streulichtsignal 10. Der Fokus der ersten Sammellinse 22 liegt hier innerhalb des ersten Interferenzfilters 20.

Die eingehenden Teilstrahlen 11 bis 15 treffen unter verschiedenen Einfallswinkeln $\alpha$ auf die Oberfläche des ersten Interferenzfilters 20. Der zentrale eingehende Teilstrahl 13 trifft unter einem Einfallswinkel $\alpha_{13} = 0°$ (hier nicht dargestellt) auf den ersten Interferenzfilter 20 und wird hier als Referenzstrahl bezeichnet. Der eingehende Teilstrahl 11 trifft unter dem Einfallswinkel $\alpha_{11}$ auf den ersten Interferenzfilter 20. Der eingehende Teilstrahl 12 trifft unter dem Einfallswinkel $\alpha_{12}$ auf den ersten Interferenzfilter 20. Der eingehende Teilstrahl 14 trifft unter dem Einfallswinkel $\alpha_{14}$ auf den ersten Interferenzfilter 20. Der eingehende Teilstrahl 15 trifft unter dem Einfallswinkel $\alpha_{15}$ auf den ersten Interferenzfilter 20. Die Einfallswinkel $\alpha_{11}$, $\alpha_{12}$, $\alpha_{14}$ und $\alpha_{15}$ sind ungleich dem Einfallswinkel $\alpha_{13}$ und damit ungleich 0°. Im Folgenden unterscheiden sich die Einfallswinkel $\alpha_{11}$ bis $\alpha_{15}$ jeweils voneinander. Mit anderen Worten propagiert das eingehende Streulichtsignal 10 nach der Sammellinse 22 konvergent.

Die eingehenden Teilstrahlen 11, 12, 13, 14 und 15 verlaufen durch den ersten Interferenzfilter 20. Da sie unter unterschiedlichen Einfallswinkeln $\alpha_{11}$ bis $\alpha_{15}$ auf den ersten Interferenzfilter 20 treffen, passieren die eingehenden Teilstrahlen 11 bis 15 den ersten Interferenzfilter 20 entlang verschiedener Wege mit den optischen Weglängen $L_{11}$, $L_{12}$, $L_{13}$, $L_{14}$ und $L_{15}$ (hier nicht eingezeichnet). Die unterschiedlichen optischen Weglängen $L_{11}$ bis $L_{15}$ bewirken, dass auf jeden der eingehenden Teilstrahlen 11 bis 15 eine andere Transmissionsfunktion angewandt wird. Wird auf den eingehenden Teilstrahl 13 beispielsweise als Referenz die erste Transmissionsfunktion angewandt, sind die Transmissionsfunktionen, die auf die eingehenden Teilstrahlen 11, 12, 14 und 15 angewandt werden, spektral um die Wellenlängen $\Delta\lambda_{11}$, $\Delta\lambda_{12}$, $\Delta\lambda_{14}$ und $\Delta\lambda_{15}$ gegenüber der ersten Transmissionsfunktion verschoben. Durch das Anwenden der Transmissionsfunktionen auf die eingehenden Teilstrahlen 11 bis 15 werden die gefilterten Teilstrahlen 41 bis 45 erzeugt.

Der gefilterte Teilstrahl 41 wird aus dem Teilstrahl 11 bei $\alpha_{11} \neq \alpha_{13}$ relativ zu dem Referenzstrahl erzeugt. Der gefilterte Teilstrahl 42 wird aus dem Teilstrahl 12 unter dem Winkel $\alpha_{12} \neq \alpha_{13}$ relativ zu dem Referenzstrahl erzeugt. Der Teilstrahl 43 wird aus dem Teilstrahl 13 als Referenzstrahl erzeugt. Der gefilterte Teilstrahl 44 wird aus dem Teilstrahl 14 unter dem Winkel $\alpha_{14} \neq \alpha_{13}$ relativ zu dem Referenzstrahl erzeugt. Der gefilterte Teilstrahl 45 wird aus dem Teilstrahl 15 unter dem Winkel $\alpha_{15} \neq \alpha_{13}$ relativ zu dem Referenzstrahl erzeugt. Die gefilterten Teilstrahlen bilden gemeinsam das gefilterte Streulichtsignal 40, wobei der gefilterte Teilstrahl 43 als erstes Streulichtsignal und die übrigen, teilweise überlagerten, gefilterten Teilstrahlen 41, 42, 44 und 45 als weitere Streulichtsignale von der Detektionseinheit detektiert werden.

Die gefilterten Teilstrahlen 41 bis 45 treffen auf die Detektionseinheit 30, welche in dieser Ausführungsform mehrere nebeneinander angeordnete Detektorzellen 32 umfasst. Die gefilterten Teilstrahlen 41 bis 45 werden von den Detektorzellen 32 detektiert. Unter Verwendung von chemometrischen Methoden kann aus dem gefilterten Streulichtsignal 40, insbesondere aus den gefilterten Teilstrahlen 41 bis 45, nach dem Detektieren ein Raman-Spektrum der gemessenen Probe erstellt werden.

In der hier dargestellten Ausführungsform ist zwischen dem ersten Interferenzfilter 20 und der Detektionseinheit 30 eine optionale zweite Sammellinse positioniert. Die Sammellinse ist eine Zylindersammellinse, deren Brennlinie auf der Detektionseinheit 30 liegt und die die gefilterten Teilstrahlen 41 - 45 in einer Ebene senkrecht zur Bildebene auf die Detektorzellen 32 der Detektionseinheit 30 fokussiert.

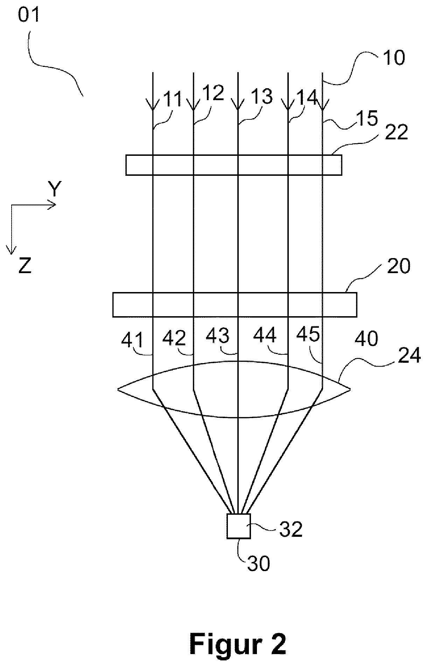

Eine um 90° gedrehte Ansicht der Ausführungsform aus Figur 1 ist in Figur 2 dargestellt. Die Teilstrahlen 11 - 15 verlaufen durch die erste Sammellinse 22 und den ersten Interferenzfilter 20, ohne in der dargestellten Bildebene gebrochen zu werden, hindurch. Die zweite Sammellinse 24 fokussiert die gefilterten Teilstrahlen 41 - 45 auf die Detektorzellen 32 der Detektoreinheit 30. Die einzelnen Detektorzellen 32 sind in dieser Ansicht hintereinander angeordnet.

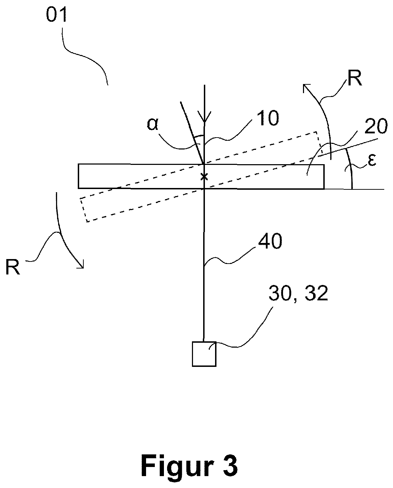

Figur 3 zeigt eine weitere schematische Darstellung einer Ausführungsform der Vorrichtung 01. Die Vorrichtung 01 umfasst eine Detektionseinheit 30, die aus einer einzelnen Detektorzelle 32 gebildet ist. Ferner umfasst die Vorrichtung 01 einen ersten Interferenzfilter 20. Der erste Interferenzfilter 20 ist schwenkbar ausgebildet, wobei der erste Interferenzfilter 20 in Schwenkrichtung R schwenkbar gelagert ist. Auf die Lage der Schwenkachse und damit auf die konkrete Ausgestaltung der Filterhalterung und des Schwenkmechanismus kommt es hierbei nicht an. Mit einer gestrichenen Linie dargestellt ist ein um den Winkel $\alpha$ geschwenkter erster Interferenzfilter 20.

Trifft das eingehende Streulichtsignal 10 auf die Oberfläche des ersten Interferenzfilters 20, so ist die Wellenlänge $\Delta\lambda$ einer spektralen Verschiebung der Transmissionsfunktion des ersten Interferenzfilters 20 von dem Einfallswinkel $\alpha$ zwischen der Propagationsrichtung des eingehenden Streulichtsignals 10 und dem Lot zur Oberfläche des ersten Interferenzfilters 20 abhängig. Wird der erste Interferenzfilter 20 um die Schwenkachse (hier innerhalb des ersten Interferenzfilters 20 liegend) in Schwenkrichtung R geschwenkt, ändert sich der Einfallswinkel $\alpha$ des eingehenden Streulichtsignals auf den ersten Interferenzfilter 20. Wird der erste Interferenzfilter, wie hier durch die gestrichene Linie angedeutet, innerhalb der dargestellten Bildebene verschwenkt, so ist der Winkel $\varepsilon$, um den der erste Interferenzfilter geschwenkt wird, gleicht der Änderung des Einfallswinkels $\alpha$. Dieser Aufbau ermöglicht das Anwenden von verschiedenen Transmissionsfunktionen, die in Abhängigkeit von dem Winkel $\varepsilon$ um die Wellenlänge $\Delta\lambda$ gegeneinander spektral verschoben sind.

Der erste Interferenzfilter 20 erzeugt aus dem eingehenden Streulichtsignal 10 durch Anwenden der von dem Winkel $\varepsilon$ abhängigen Transmissionsfunktion ein gefiltertes Streulichtsignal 40. Das gefilterte Streulichtsignal 40 wird von der Detektorzelle 32 der Detektionseinheit 30 detektiert. Um verschiedene Transmissionsfunktionen auf das eingehende Streulichtsignal 10 anzuwenden, werden in dieser Ausführungsform mehrere Messungen mit jeweils unterschiedlichen Stellungen des ersten Interferenzfilters 20 durchgeführt, sodass bei jeder Messung das eingehende Streulichtsignal 10 unter einem anderen Einfallswinkel $\alpha$ auf den ersten Interferenzfilter 20 trifft.

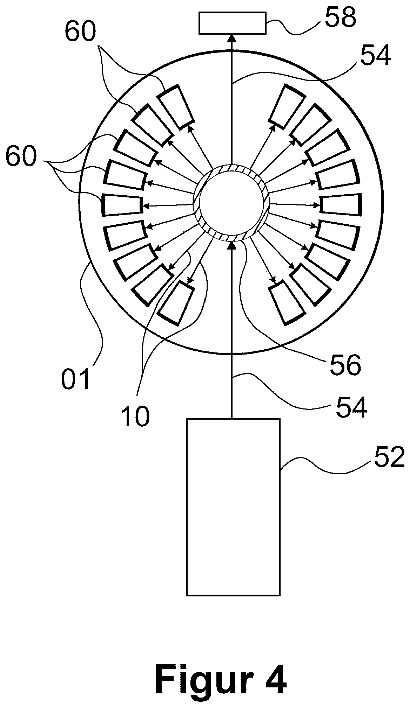

Figur 4 zeigt eine schematische Darstellung einer weiteren Ausführungsform der Vorrichtung 01 und wie sie zur Detektion von Raman-Streulicht verwendet wird. Die Vorrichtung 01 wird in den Strahlengang eines Laserstrahls 54 platziert, wobei der Laserstrahl 54 von einer Laserquelle 52 erzeugt wird.

In der Mitte der Vorrichtung 01 verläuft senkrecht zur Bildebene eine Kapillare 56. Durch die Kapillare 56 fließt entweder in die Bildebene hinein oder aus der Bildebene heraus eine Mischung, die eine zu untersuchende Probe umfasst. Die für das Laserlicht transparente Wand der Kapillare 56 ist in Figur 4 schraffiert dargestellt.

Der Laserstrahl 54 durchquert die Vorrichtung 01, wobei er die Kapillare 56 durchdringt. Das Laserlicht des Laserstrahls 54 wird, zumindest teilweise, an der Probe innerhalb der Kapillare 56 in alle Richtungen gestreut, wodurch das noch nicht detektierte Streulicht als (zu detektierendes und eingehendes) Streulichtsignal 10 in alle Richtungen propagiert. Hinter der Vorrichtung 01 ist ein Transmissionsdetektor 58 positioniert, der das nicht gestreute Laserlicht detektiert und/oder absorbiert. Die Propagationsrichtungen der eingehenden Streulichtsignale 10 und des Laserstrahls 54 sind hier durch Pfeile angedeutet.

Die Vorrichtung umfasst ferner mehrere Detektoren 60, die kreisförmig um die Kapillare 56 angeordnet sind. Die Anordnung der Detektoren 60 ist in den Bereichen des Strahlengangs des Laserstrahls 54 unterbrochen, sodass der Laserstrahl 54 nicht von den Detektoren 60 blockiert wird oder die Detektoren 60 das ungestreute Laserlicht detektieren.

Die Detektoren 60 umfassen jeweils wenigstens eine Detektionseinheit und wenigstens einen Interferenzfilter. Gegebenenfalls können die Detektoren 60 eine oder mehrere Sammellinsen umfassen. Die Detektionseinheiten können ferner jeweils eine oder mehrere Detektionszellen umfassen.

Die Detektoren 60 unterscheiden sich dadurch voneinander, dass die Interferenzfilter unterschiedliche spektrale Bereiche filtern. Die Interferenzfilter in den Detektoren 60 können beispielsweise unterschiedlich zu der jeweiligen Propagationsrichtung der eingehenden Streusignale 10 orientiert sein, sodass die eingehenden Streulichtsignale 10 mit unterschiedlichen Winkeln $\alpha$ auf die Interferenzfilter treffen. Alternativ oder zusätzlich können die Interferenzfilter unterschiedlich dick beschichtet sein. Mit anderen Worten, die Detektoren 60 unterscheiden sich durch unterschiedliche optische Weglängen L durch ihre Interferenzfilter voneinander.

Die eingehenden Streulichtsignale 10 werden nach der Transmission durch die Interferenzfilter als gefilterte Streulichtsignale von den Detektionseinheiten der Detektoren 60 detektiert. Aus den detektierten Streulichtsignalen kann schließlich ein Raman-Spektrum erzeugt werden.

In vorteilhafter Weise können mit der Ausführungsform der Vorrichtung nach Figur 4 mehrere Messungen parallel durchgeführt werden.

**Bezugszeichenliste**

| 01 | Vorrichtung |
| 10 | eingehendes Streulichtsignal |
| 11 | eingehender Teilstrahl |
| 12 | eingehender Teilstrahl |
| 13 | eingehender Teilstrahl |
| 14 | eingehender Teilstrahl |
| 15 | eingehender Teilstrahl |
| 20 | erster Interferenzfilter |
| 22 | erste Sammellinse |
| 24 | zweite Sammellinse |
| 30 | Detektionseinheit |
| 32 | Detektorzelle |
| 40 | gefiltertes Streulichtsignal |
| 41 | gefilterter Teilstrahl |
| 42 | gefilterter Teilstrahl |
| 43 | gefilterter Teilstrahl |
| 44 | gefilterter Teilstrahl |
| 45 | gefilterter Teilstrahl |
| 52 | Laserquelle |
| 54 | Laserstrahl |
| 56 | Kapillare |
| 58 | Transmissionsdetektor |
| 60 | Detektor |

| R | Schwenkrichtung |
| $\Delta\lambda_{1,2,i}$ | Wellenlänge der spektralen Verschiebung |
| $\lambda_{1,2,i}$ | mittlere Wellenlänge |
| $L_{1,2,i}$ | optischen Weglänge |
| $\delta\lambda_{1,2,i}$ | spektrales Band |
| $\alpha$ | Einfallswinkel |
| $\varepsilon$ | Winkel |

**Patentansprüche**

1. Verfahren zum Detektieren von Raman-Streulicht unter Verwendung eines Raman-Gerätes mit einer Lichtquelle zur Erzeugung von Anregungslicht, mittels dem Teilchen in einer Probe zum Emittieren des Raman-Streulichts angeregt werden, mit wenigstens einem Interferenzfilters und einer Detektionseinheit (30), wobei das zu detektierende Raman-Streulicht ein eingehendes Streulichtsignal (10) umfasst,
wobei das Verfahren die folgenden Schritte umfasst:

• Erzeugen eines ersten gefilterten Streulichtsignals (40) mittels eines ersten Interferenzfilters in Abhängigkeit von einer ersten optischen Weglänge $L_1$ des Lichtes durch den ersten Interferenzfilter, wobei eine erste Transmissionsfunktion auf das eingehende Streulichtsignal (10) angewandt wird, wobei die erste Transmissionsfunktion der ersten optischen Weglänge $L_1$ durch den ersten Interferenzfilter (20) zugeordnet ist, wobei die erste Transmissionsfunktion ein erstes spektrales Band $\delta\lambda_1$ definiert, wobei das erste spektrale Band $\delta\lambda_1$ Licht mit ersten Wellenlängen um eine erste mittlere Wellenlänge $\lambda_1$ umfasst, wobei das Licht der ersten Wellenlängen durch den ersten Interferenzfilter (20) transmittiert,
• Erzeugen eines zweiten gefilterten Streulichtsignals (40) mittels des ersten Interferenzfilters oder mittels eines zweiten Interferenzfilters in Abhängigkeit von einer zweiten optischen Weglänge $L_2 \neq L_1$, wobei eine zweite Transmissionsfunktion auf das eingehende Streulichtsignal (10) angewandt wird, wobei die zweite Transmissionsfunktion der zweiten optischen Weglänge $L_2 \neq L_1$ durch den ersten Interferenzfilter (20) oder durch einen zweiten Interferenzfilter zugeordnet ist, wobei die zweite Transmissionsfunktion ein zweites spektrales Band $\delta\lambda_2$ definiert, wobei das zweite spektrale Band $\delta\lambda_2$ Licht mit zweiten Wellenlängen um eine zweite mittlere Wellenlänge $\lambda_2$ umfasst, wobei die zweite mittlere Wellenlänge $\lambda_2$ für die zweite Transmissionsfunktion in der gleichen Weise bestimmt wird wie die erste mittlere Wellenlänge $\lambda_1$ für die erste Transmissionsfunktion, wobei die zweite mittlere Wellenlänge $\lambda_2$ gegenüber der ersten mittleren Wellenlänge $\lambda_1$ um eine Wellenlänge $\Delta\lambda_2$ verschoben ist, die kleiner als die Breite des zweiten spektralen Bands $\delta\lambda_2$ der zweiten Transmissionsfunktion ist, und wobei das Licht der zweiten Wellenlängen durch den ersten Interferenzfilter (20) oder durch den zweiten Interferenzfilter transmittiert,
- Detektieren des ersten und des zweiten gefilterten Streulichtsignals (40) durch die Detektionseinheit (30).

2. Verfahren nach Anspruch 1, **dadurch gekennzeichnet, dass** als erste mittlere Wellenlänge $\lambda_1$ wahlweise der arithmetische Mittelwert, der Modus, der Median oder ein gewichteter Mittelwert der ersten Wellenlängen des transmittierten Lichtes und als zweite mittlere Wellenlänge $\lambda_1$ dementsprechend der arithmetische Mittelwert, der Modus, der Median oder ein gewichteter Mittelwert der zweiten Wellenlängen des transmittierten Lichtes herangezogen werden.

3. Verfahren nach einem der vorstehenden Ansprüche, **dadurch gekennzeichnet, dass** das Verfahren ferner folgende Schritte umfasst:

- Erzeugen eines Referenzlichtsignals,
- Erzeugen eines ersten gefilterten Referenzlichtsignals mittels des ersten Interferenzfilters in Abhängigkeit von der ersten optischen Weglänge $L_1$ des Lichtes durch den ersten Interferenzfilter, wobei die erste Transmissionsfunktion auf das Referenzlichtsignal angewandt wird, wobei das erste gefilterte Referenzlichtsignal dem ersten gefilterten Streulichtsignal (40) zugeordnet ist,
- Erzeugen eines zweiten gefilterten Referenzlichtsignals mittels des ersten Interferenzfilters oder mittels des zweiten Interferenzfilters in Abhängigkeit von der zweiten optischen Weglänge $L_2 \neq L_1$, wobei die zweite Transmissionsfunktion auf das Referenzlichtsignal angewandt wird, wobei das zweite gefilterte Referenzlichtsignal dem zweiten gefilterten Streulichtsignal (40) zugeordnet ist,
- Detektieren des ersten und zweiten gefilterten Referenzlichtsignals durch die Detektionseinheit (30),
- Erzeugen korrigierter gefilterter Streulichtsignale durch Subtrahieren der gefilterten Referenzlichtsignale von den jeweils zugeordneten gefilterten Streulichtsignalen (40).

4. Verfahren nach einem der vorherigen Ansprüche, **dadurch gekennzeichnet, dass** aus den detektieren Streulichtsignalen oder aus den korrigierten Streulichtsignalen ein Raman-Spektrum erzeugt wird.

5. Verfahren nach Anspruch 4, **dadurch gekennzeichnet, dass** für das Erzeugen des Raman-Spektrums eine multivariante Datenanalyse, insbesondere Chemometrie, verwendet wird.

6. Verfahren nach einem der Ansprüche 1 bis 5, **dadurch gekennzeichnet, dass** zwischen dem Erzeugen des ersten gefilterten Streulichtsignals (40) und dem Erzeugen des zweiten gefilterten Streulichtsignals (40) ein Austauschen des ersten Interferenzfilters (20) durch den zweiten Interferenzfilter erfolgt.

7. Verfahren nach einem der Ansprüche 1 bis 6, **dadurch gekennzeichnet, dass** das eingehende Streulichtsignal (10) divergent oder konvergent propagiert und das Erzeugen des ersten gefilterten Streulichtsignals (40) unter einem ersten Winkel $\alpha_1$ relativ zu einem Referenzstrahl und das Erzeugen des zweiten gefilterten Streulichtsignals (40) unter einem zweiten Winkel $\alpha_2 \neq \alpha_1$ relativ zu dem Referenzstrahl erfolgen und das Licht der ersten Wellenlängen und das Licht der zweiten Wellenlängen durch den ersten Interferenzfilter (20) transmittiert.

8. Vorrichtung (01) zum Detektieren von Raman-Streulicht, **dadurch gekennzeichnet, dass** die Vorrichtung dazu ausgebildet ist, das Verfahren nach Anspruch 1 auszuführen,

wobei die Vorrichtung umfasst: **-** eine Lichtquelle zur Erzeugung von Anregungslicht

- einen ersten Interferenzfilter (20), wobei der erste Interferenzfilter eingerichtet ist, ein erstes gefiltertes Streulichtsignal (40) in Abhängigkeit von einer ersten optischen Weglänge $L_1$ des Lichtes durch den ersten Interferenzfilter zu erzeugen, wobei eine erste Transmissionsfunktion auf das eingehende Streulichtsignal (10) angewandt wird, wobei die erste Transmissionsfunktion von der ersten optischen Weglänge $L_1$ durch den ersten Interferenzfilter (20) abhängig ist, wobei die erste Transmissionsfunktion ein erstes spektrales Band $\delta\lambda_1$ definiert, wobei das erste spektrale Band $\delta\lambda_1$ Licht mit ersten Wellenlängen um eine erste mittlere Wellenlänge $\lambda_1$ umfasst, wobei das Licht der ersten Wellenlängen durch den ersten Interferenzfilter (20) transmittiert,
- eine erste Linse (22) und
- eine Detektionseinheit (30), wobei die Detektionseinheit (30) ein Array aus Detektorzellen (32) umfasst, wobei das Array relativ zu der ersten Linse (22) so ausgerichtet ist, dass Licht durch die erste Linse (22) konvergent oder divergent auf das Array abgebildet wird,

wobei der erste Interferenzfilter (20) zwischen der ersten Linse (22) und der Detektionseinheit (30) positioniert ist, wodurch der erste Interferenzfilter (20) eingerichtet ist, ein zweites gefiltertes Streulichtsignal (40) in Abhängigkeit von einer zweiten optischen Weglänge $L_2 \neq L_1$ des Lichts durch den ersten Interferenzfilter zu erzeugen, wobei eine zweite Transmissionsfunktion auf das eingehende Streulichtsignal (10) angewandt wird, wobei die zweite Transmissionsfunktion von der zweiten optischen Weglänge $L_2 \neq L_1$ durch den ersten Interferenzfilter (20) abhängt, wobei die zweite Transmissionsfunktion ein zweites spektrales Band $\delta\lambda_2$ definiert, wobei das zweite spektrale Band $\delta\lambda_2$ Licht mit zweiten Wellenlängen um eine zweite mittlere Wellenlänge $\lambda_2$ umfasst, wobei die zweite mittlere Wellenlänge $\lambda_2$ für die zweite Transmissionsfunktion in der gleichen Weise bestimmt wird wie die erste mittlere Wellenlänge $\lambda_1$ für die erste Transmissionsfunktion, wobei die zweite mittlere Wellenlänge $\lambda_2$ gegenüber der ersten mittleren Wellenlänge $\lambda_1$ um eine Wellenlänge $\Delta\lambda_2$ verschoben ist, die kleiner als die Breite des zweiten spektralen Bands $\delta\lambda_2$ der zweiten Transmissionsfunktion ist, und wobei das Licht der zweiten Wellenlängen durch den ersten Interferenzfilter (20) transmittiert.

9. Vorrichtung (01) nach Anspruch 8, **dadurch gekennzeichnet, dass** die erste Linse (22) als Zylinderlinse mit einer ersten Zylinderachse ausgebildet ist, wobei die Vorrichtung ferner eine zweite Linse umfasst, wobei die zweite Linse als Zylindersammellinse mit einer zweiten Zylinderachse ausgebildet ist,

wobei die erste und die zweite Zylinderachse senkrecht zueinander orientiert sind und
wobei das Array (32) entlang der Brennlinie der zweiten Linse positioniert ist.

10. Vorrichtung (01) nach Anspruch 9, **dadurch gekennzeichnet, dass** die zweite Linse zwischen dem ersten Interferenzfilter (20) und dem Array aus Detektorzellen (32) positioniert ist.

11. System zum Detektieren von Raman-Streulicht, umfassend eine Lichtquelle, insbesondere eine Laserquelle, eine Vorrichtung zum Positionieren einer Probe und eine optische Vorrichtung, wobei die optische Vorrichtung dazu ausgebildet ist, das Licht der Lichtquelle auf die Probe zu richten, **dadurch gekennzeichnet, dass** das System ferner eine Vorrichtung nach einem der Ansprüche 8 bis 10 umfasst.

**Claims**

1. Method for detecting Raman scattered light using a Raman device having a light source for generating excitation light by means of which particles in a sample are excited to emit the Raman scattered light, having at least one interference filter and a detection unit (30), wherein the Raman scattered light to be detected comprises an incoming scattered light signal (10),
wherein the method comprises the following steps:

• generating a first filtered scattered light signal (40) by means of a first interference filter as a function of a first optical path length $L_1$ of the light through the first interference filter, wherein a first transmission function is applied to the incoming scattered light signal (10), wherein the first transmission function is associated with the first optical path length $L_1$ through the first interference filter (20), wherein the first transmission function defines a first spectral band $\delta\lambda_1$, wherein the first spectral band $\delta\lambda_1$ comprises light with first wavelengths around a first average wavelength $\lambda_1$, wherein the light of the first wavelengths transmits through the first interference filter (20),
• generating a second filtered scattered light signal (40) by means of the first interference filter or by means of a second interference filter as a function of a second optical path length $L_2 \neq L_1$, wherein a second transmission function is applied to the incoming scattered light signal (10), wherein the second transmission function is assigned to the second optical path length $L_2 \neq L_1$ through the first interference filter (20) or through a second interference filter, wherein the second transmission function defines a second spectral band $\delta\lambda_2$, wherein the second spectral band $\delta\lambda_2$ comprises light with second wavelengths around a second average wavelength $\lambda_2$, wherein the second average wavelength $\lambda_2$ for the second transmission function is determined in the same way as the first average wavelength $\lambda_1$ for the first transmission function, wherein the second average wavelength $\lambda_2$ is offset relative to the first average wavelength $\lambda_1$ around a wavelength $\Delta\lambda_2$ that is smaller than the width of the second spectral band $\delta\lambda_2$ of the second transmission function, and wherein the light of the second wavelengths transmits through the first interference filter (20) or through the second interference filter,
• detecting the first and second filtered scattered light signal (40) through the detection unit (30).

2. Method according to claim 1, **characterised in that** the first average wavelength $\lambda_1$ is optionally the arithmetic mean, the mode, the median or a weighted average of the first wavelengths of the transmitted light, and the second average

wavelength $\lambda_1$ is accordingly the arithmetic mean, the mode, the median or a weighted average of the second wavelengths of the transmitted light.

3. Method according to one of the preceding claims, **characterised in that** the method further comprises the following steps:

- generating a reference light signal,
- generating a first filtered reference light signal by means of the first interference filter as a function of the first optical path length $L_1$ of the light through the first interference filter, wherein the first transmission function is applied to the reference light signal, wherein the first filtered reference light signal is associated with the first filtered scattered light signal (40),
- generating a second filtered reference light signal by means of the first interference filter or by means of the second interference filter as a function of the second optical path length $L_2 \neq L_1$, wherein the second transmission function is applied to the reference light signal, wherein the second filtered reference light signal is associated with the second filtered scattered light signal (40),
- detecting the first and second filtered reference light signal through the detection unit (30),
- generating corrected filtered scattered light signals by subtracting the filtered reference light signals from the respectively associated filtered scattered light signals (40).

4. Method according to one of the preceding claims, **characterised in that** a Raman spectrum is generated from the detected scattered light signals or from the corrected scattered light signals.

5. Method according to claim 4, **characterised in that** a multivariate data analysis, in particular chemometrics, is used for generating the Raman spectrum.

6. Method according to one of claims 1 to 5, **characterised in that** between the generation of the first filtered scattered light signal (40) and the generation of the second filtered scattered light signal (40), the first interference filter (20) is replaced by the second interference filter.

7. Method according to one of claims 1 to 6, **characterised in that** the incoming scattered light signal (10) is divergently or convergently propagated and the generation of the first filtered scattered light signal (40) takes place at a first angle $\alpha_1$ relative to a reference beam and the generation of the second filtered scattered light signal (40) takes place at a second angle $\alpha_2 \neq \alpha_1$ relative to the reference beam and transmits the light of the first wavelengths and the light of the second wavelengths through the first interference filter (20).

8. Device (01) for detecting Raman scattered light, **characterised in that** the device is designed to carry out the method according to claim 1, wherein the device comprises: - a light source for generating excitation light

- a first interference filter (20), wherein the first interference filter is configured to generate a first filtered scattered light signal (40) as a function of a first optical path length $L_1$ of the light through the first interference filter, wherein a first transmission function is applied to the incoming scattered light signal (10), wherein the first transmission function is a function of the first optical path length $L_1$ through the first interference filter (20), wherein the first transmission function defines a first spectral band $\delta\lambda_1$, wherein the first spectral band $\delta\lambda_1$ comprises light with first wavelengths around a first average wavelength $\lambda_1$, wherein the light of the first wavelengths transmits through the first interference filter (20),
- a first lens (22) and
- a detection unit (30), wherein the detection unit (30) comprises an array of detector cells (32), wherein the array is oriented relative to the first lens (22) such that light through the first lens (22) is imaged onto the array in a convergent or divergent manner,

wherein the first interference filter (20) is positioned between the first lens (22) and the detection unit (30), whereby the first interference filter (20) is configured to generate a second filtered scattered light signal (40) as a function of a second optical path length $L_2 \neq L_1$ of the light through the first interference filter, wherein a second transmission function is applied to the incoming scattered light signal (10), wherein the second transmission function is a function of the second optical path length $L_2 \neq L_1$ through the first interference filter (20), wherein the second transmission function defines a second spectral band $\delta\lambda_2$, wherein the second spectral band $\delta\lambda_2$ comprises light with second wavelengths around a second average wavelength $\lambda_2$, wherein the second average wavelength $\lambda_2$ for the second transmission function is determined in the same way as the first average wavelength $\lambda_1$ for the first transmission function, wherein the second average wavelength $\lambda_2$ is offset relative to the first average wavelength $\lambda_1$ around a wavelength $\Delta\lambda_2$ which is smaller than the width of the second spectral band $\delta\lambda_2$ of the second transmission function, and wherein the light of the second wavelengths transmits through the first interference filter (20).

9. Device (01) according to claim 8, **characterised in that** the first lens (22) is designed as a cylindrical lens with a first cylinder axis, wherein the device further comprises a second lens, wherein the second lens is designed as a cylindrical convergent lens with a second cylinder axis, wherein the first and second cylinder axes are oriented perpendicular to one another, and wherein the array (32) is positioned along the focal line of the second lens.

10. Device (01) according to claim 9, **characterised in that** the second lens is positioned between the first interference filter (20) and the array of detector cells (32).

11. System for detecting Raman scattered light, comprising a light source, in particular a laser source, a device for positioning a sample and an optical device, wherein the optical device is designed to direct the light of the light source onto the sample, **characterised in that** the system further comprises a device according to one of claims 8 to 10.

**Revendications**

1. Procédé permettant de détecter la lumière diffusée Raman à l'aide d'un appareil Raman ayant une source de lumière pour la génération d'une lumière d'excitation, au moyen de laquelle des particules dans un échantillon sont excitées pour émettre la lumière diffusée Raman, ayant au moins un filtre interférentiel et une unité de détection (30), et dans lequel la lumière diffusée Raman à détecter comprend un signal de lumière diffusée entrant (10),
ledit procédé comprenant les étapes suivantes :

    • génération d'un premier signal de lumière diffusée filtré (40) au moyen d'un premier filtre interférentiel en fonction d'une première longueur de trajet optique $L_1$ de la lumière à travers le premier filtre interférentiel, une première fonction de transmission étant appliquée au signal de lumière diffusée entrant (10), ladite première fonction de transmission étant affectée à la première longueur de trajet optique $L_1$ à travers le premier filtre interférentiel (20) et définissant une première bande spectrale $\delta\lambda_1$, ladite première bande spectrale $\delta\lambda_1$ comprenant une lumière présentant des premières longueurs d'onde autour d'une première longueur d'onde moyenne $\lambda_1$, la lumière des premières longueurs d'onde étant transmise à travers le premier filtre interférentiel (20),
    • génération d'un second signal de lumière diffusée filtré (40) au moyen du premier filtre interférentiel ou au moyen d'un second filtre interférentiel en fonction d'une seconde longueur de trajet optique $L_2 \neq L_1$, une seconde fonction de transmission étant appliquée au signal de lumière diffusée entrant (10), ladite seconde fonction de transmission étant affectée à la seconde longueur de trajet optique $L_2 \neq L_1$ à travers le premier filtre interférentiel (20) ou à travers un second filtre interférentiel et définissant une seconde bande spectrale $\delta\lambda_2$, ladite seconde bande spectrale $\delta\lambda_2$ comprenant une lumière présentant des secondes longueurs d'onde autour d'une seconde longueur d'onde moyenne $\lambda_2$, ladite seconde longueur d'onde moyenne $\lambda_2$ étant déterminée pour la seconde fonction de transmission de la même manière que la première longueur d'onde moyenne $\lambda_1$ pour la première fonction de transmission, la seconde longueur d'onde moyenne $\lambda_2$ étant décalée par rapport à la première longueur d'onde moyenne $\lambda_1$ d'une valeur de longueur d'onde $\Delta\lambda_2$, qui est inférieure à la largeur de la seconde bande spectrale $\delta\lambda_2$ de la seconde fonction de transmission, la lumière des secondes longueurs d'onde étant transmise à travers le premier filtre interférentiel (20) ou à travers le second filtre interférentiel,
    • détection des premier et second signaux de lumière diffusée filtrés (40) par l'unité de détection (30).

2. Procédé selon la revendication 1, **caractérisé en ce que,** comme première longueur d'onde moyenne $\lambda_1$, on utilise au choix la moyenne arithmétique, le mode, la médiane ou une moyenne pondérée des premières longueurs d'onde de la lumière transmise et, comme seconde longueur d'onde moyenne $\lambda_1$, on utilise en conséquence la moyenne arithmétique, le mode, la médiane ou une moyenne pondérée des secondes longueurs d'onde de la lumière transmise.

3. Procédé selon l'une quelconque des revendications précédentes, **caractérisé en ce qu'**il comprend en outre les étapes suivantes :

    • génération d'un signal de lumière de référence,
    • génération d'un premier signal de lumière de référence filtré au moyen du premier filtre interférentiel en fonction

**EP 3 977 074 B1**

de la première longueur de trajet optique $L_1$ de la lumière à travers le premier filtre interférentiel, la première fonction de transmission étant appliquée au signal de lumière de référence, ledit premier signal de lumière de référence filtré étant affecté au premier signal de lumière diffusée filtré (40),

• génération d'un second signal de lumière de référence filtré au moyen du premier filtre interférentiel ou au moyen du second filtre interférentiel en fonction de la seconde longueur de trajet optique $L_2 \neq L_1$, la seconde fonction de transmission étant appliquée au signal de lumière de référence, ledit second signal de lumière de référence filtré étant affecté au second signal de lumière diffusée filtré (40),

• détection des premier et second signaux de lumière de référence filtrés par l'unité de détection (30),

• génération de signaux de lumière diffusée filtrés corrigés par soustraction des signaux de lumière de référence filtrés des signaux de lumière diffusée filtrés correspondants (40).

4. Procédé selon l'une quelconque des revendications précédentes, **caractérisé en ce qu'**un spectre Raman est généré à partir des signaux de lumière diffusée détectés ou à partir des signaux de lumière diffusée corrigés.

5. Procédé selon la revendication 4, **caractérisé en ce qu'**une analyse de données multivariée, en particulier une analyse chimiométrique, est utilisée pour la génération du spectre Raman.

6. Procédé selon l'une quelconque des revendications 1 à 5, **caractérisé en ce que,** entre la génération du premier signal de lumière diffusée filtré (40) et la génération du second signal de lumière diffusée filtré (40), un remplacement du premier filtre interférentiel (20) par le second filtre interférentiel est effectué.

7. Procédé selon l'une quelconque des revendications 1 à 6, **caractérisé en ce que** le signal de lumière diffusée entrant (10) se propage de manière divergente ou convergente et la génération du premier signal de lumière diffusée filtré (40) s'effectue selon un premier angle $\alpha_1$ par rapport à un faisceau de référence et la génération du second signal de lumière diffusée filtré (40) s'effectue selon un second angle $\alpha_2 \neq \alpha_1$ par rapport audit faisceau de référence, et la lumière des premières longueurs d'onde et la lumière des secondes longueurs d'onde sont transmises à travers le premier filtre interférentiel (20).

8. Dispositif (01) destiné à détecter la lumière diffusée Raman, **caractérisé en ce qu'**il est conçu pour exécuter le procédé selon la revendication 1, ledit dispositif comprenant : - une source de lumière pour la génération de la lumière d'excitation

• un premier filtre interférentiel (20), ledit premier filtre interférentiel étant configuré pour générer un premier signal de lumière diffusée filtré (40) en fonction d'une première longueur de trajet optique $L_1$ de la lumière à travers le premier filtre interférentiel, une première fonction de transmission étant appliquée au signal de lumière diffusée entrant (10), ladite première fonction de transmission dépendant de la première longueur de trajet optique $L_1$ à travers le premier filtre interférentiel (20) et définissant une première bande spectrale $\delta\lambda_1$, ladite première bande spectrale $\delta\lambda_1$ comprenant une lumière présentant des premières longueurs d'onde autour d'une première longueur d'onde moyenne $\lambda_1$, la lumière des premières longueurs d'onde étant transmise à travers le premier filtre interférentiel (20),

• une première lentille (22) et

• une unité de détection (30), ladite unité de détection (30) comprenant un réseau de cellules de détection (32), ledit réseau étant orienté par rapport à la première lentille (22) de manière à ce que la lumière soit formée de façon convergente ou divergente sur ledit réseau à travers la première lentille (22), dans lequel le premier filtre interférentiel (20) est positionné entre la première lentille (22) et l'unité de détection (30), ledit premier filtre interférentiel (20) étant configuré de manière à générer un second signal de lumière diffusée filtré (40) en fonction d'une seconde longueur de trajet optique $L_2 \neq L_1$ de la lumière à travers le premier filtre interférentiel, une seconde fonction de transmission étant appliquée au signal de lumière diffusée entrant (10), ladite seconde fonction de transmission dépendant de la seconde longueur de trajet optique $L_2 \neq L_1$ à travers le premier filtre interférentiel (20) et définissant une seconde bande spectrale $\delta\lambda_2$, ladite seconde bande spectrale $\delta\lambda_2$ comprenant une lumière présentant des secondes longueurs d'onde autour d'une seconde longueur d'onde moyenne $\lambda_2$, ladite seconde longueur d'onde moyenne $\lambda_2$ étant déterminée pour la seconde fonction de transmission de la même manière que la première longueur d'onde moyenne $\lambda_1$ pour la première fonction de transmission, la seconde longueur d'onde moyenne $\lambda_2$ étant décalée par rapport à la première longueur d'onde moyenne $\lambda_1$ d'une valeur de longueur d'onde $\Delta\lambda_2$ qui est inférieure à la largeur de la seconde bande spectrale $\delta\lambda_2$ de la seconde fonction de transmission, la lumière des secondes longueurs d'onde étant transmise à travers le premier filtre interférentiel (20).

**9.** Dispositif (01) selon la revendication 8, **caractérisé en ce que** la première lentille (22) est réalisée sous la forme d'une lentille cylindrique présentant un premier axe cylindrique, ledit dispositif comprenant en outre une seconde lentille, qui est réalisée sous la forme d'une lentille convergente cylindrique présentant un second axe cylindrique,

les premier et second axes cylindriques étant orientés perpendiculairement l'un par rapport à l'autre, et dans lequel le réseau (32) est positionné le long de la ligne focale de la seconde lentille.

**10.** Dispositif (01) selon la revendication 9, **caractérisé en ce que** la seconde lentille est positionnée entre le premier filtre interférentiel (20) et le réseau de cellules de détection (32).

**11.** Système destiné à détecter la lumière diffusée Raman, comprenant une source de lumière, en particulier une source laser, un dispositif pour positionner un échantillon et un dispositif optique, ledit dispositif optique étant conçu pour diriger la lumière de la source de lumière sur l'échantillon, **caractérisé en ce que**
le system comprend en outre un dispositif selon l'une quelconque des revendications 8 à 10.

**Figur 1**

**Figur 2**

**Figur 3**

**Figur 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4648714 A
- US 2018275064 A
- US 4784486 A
- US 4176916 A

**In der Beschreibung aufgeführte Nicht-Patentliteratur**

- **N. P. IVLEVA** ; **A. C. WIESHEU** ; **R. NIESSNER**. Microplastic in aquatic ecosystems. *Angewandte Chemie International Edition*, 2017, vol. 56 (7), 1720-1739
- vgl. Nondispersive Raman Spectrometers. *Raman Spectroscopy for Chemical Analysis*, 2005